# EUROPEAN PATENT APPLICATION

(11) **EP 2 405 375 A1**
(43) Date of publication of application: **11.01.2012**
(21) Application number: 10305763.4
(22) Date of filing: 08.07.2010
(51) Int. Cl.: G06F 21/00

(54) **Method of exchanging data between a contactless card and a microprocessor card**

(71) Applicant: Gemalto SA, 92190 Meudon (FR)
(72) Inventor: BRUN, Alain, 13400, AUBAGNE (FR); MARTINENT, Jean-François, 13600, LA CIOTAT (FR)

(57) **Abstract**

The invention is a method for exchanging data between a contactless card and a microprocessor card. The contactless card comprises first and second data. The second data comprises a rule and an access condition associated to the first data. The method comprises the following steps of:
- getting the first data in the microprocessor card if the access condition permits to reach first data,
- getting the rule in the microprocessor card,
- updating first and second data into the contactless card according to the rule.

## Description

### (Field of the invention)

The present invention relates to methods of exchanging data between a contactless card and a microprocessor card. It relates particularly to methods of enhancing features of microprocessor cards.

### (State of the art)

A chip card is a pocket-sized card with embedded integrated circuits. Chip cards are also named integrated circuit cards (ICC). There are two broad categories of chip cards: memory cards and microprocessor cards. Microprocessor cards contain volatile memory and microprocessor components. A microprocessor card has an operating system running on its microprocessor. Memory cards contain only nonvolatile memory storage components and perhaps dedicated security logic. When connected to a host machine, a memory card is seen as storage token.

A chip card may be a contactless card. A contactless card has an antenna allowing an inductive coupling. A contactless card exchanges data with a reader through a modulated magnetic field. For example a contactless memory card may comply with the NFC (Near Field Communication) technology. Usually contactless cards communicate with an application hosted by the contactless reader.

A contactless card may contain a data intended to be used by a microprocessor card.

There is a need for allowing the controlled transfer of data from a contactless card to a microprocessor card.

### (Summary of the Invention)

An object of the invention is to solve the above mentioned technical problem.

The object of the present invention is a system comprising a contactless card and a microprocessor card. The contactless card comprises a first data. The contactless card comprises a second data which contains both a rule and an access condition associated to the first data. The microprocessor card comprises a management means which is capable of retrieving the first data and the rule from the contactless card. The management means is capable of updating the first and second data into the contactless card according to the rule.

Advantageously, the management means may be capable of updating the access condition by restricting or forbidding access to the first data.

In one embodiment, the management means may be capable of checking the access condition.

In one embodiment, first and second data may be stored at predefined addresses in the contactless card and the management means may be capable of getting these addresses.

Advantageously, the first data may be ciphered, the microprocessor card may comprise a secret value and the management means may be capable of deciphering the first data by using the secret value.

In one embodiment, the contactless card may comprise a use condition, the management means may be capable of retrieving the use condition, and the microprocessor card may comprise a controlling means which enforces compliance of the use condition when the first data is used in the microprocessor card.

In a preferred embodiment, the first data may be is an executable data. Advantageously, the execution of the first data may generate a third data. The microprocessor card may comprise both a storing means and a cleaning means. The storing means may be capable of storing the third data in the microprocessor card and the cleaning means may be capable of deleting the first data from the microprocessor card.

Advantageously, the execution of the first data may generate a fourth data and the management means may be capable of storing the fourth data in the contactless card.

In a preferred embodiment, both the microprocessor card and the contactless card may be playing cards.

Advantageously, the system may comprise a contactless reader which contains a routing means capable of transferring data exchanged between the contactless card and the microprocessor card.

Another object of the invention is a method for exchanging data between a contactless card and a microprocessor card. The contactless card comprises first and second data. The second data comprises a rule and an access condition associated to the first data. The method comprises the following steps:
- getting the first data in the microprocessor card if the access condition permits to reach first data,
- getting the rule in the microprocessor card,
- updating the first and/or the second data into the contactless card according to the rule.

Advantageously, the contactless card may comprise a use condition and the method may comprise the further steps:
- getting the use condition in the microprocessor card,
- using the first data in the microprocessor card according to the use condition.

In a preferred embodiment, the first data may be an executable data and the method may comprise the further steps:
- generating a third data by executing the first data in the microprocessor card,
- storing the third data in the microprocessor card,
- deleting the first data from the microprocessor card.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of a system comprising a contactless memory card and a contactless microprocessor card communicating through a contactless reader according to the invention; and
- Figure 2 is an example of system comprising a contactless memory card and a microprocessor card plugged into a portable device according to the invention.

### (Detailed description of the preferred embodiments)

The invention may apply to any types of system comprising a contactless card and a microprocessor card. The microprocessor card may be a contact card plugged into a contactless device. For example, the microprocessor card may be a card inserted in a NFC mobile phone or any portable device providing contactless reader features like a Personal Digital Assistant (PDA), a multimedia reader and a small computer.

The invention is also well suited for allowing communication between a contactless card and a contactless microprocessor card.

The contactless card may be a contactless memory card or a contactless microprocessor card.

The contactless card may be any kind of portable memory device reachable in contactless mode and able to provide data storage service. In particular, the invention applies to systems comprising a NFC tag.

An advantage of the invention is to allow controlling the way the data retrieved from the contactless card is used in the microprocessor card.

Thanks to the invention, a piece of software may be installed into the microprocessor card from the contactless card.

Another advantage of the invention is to allow limiting the number of transfer of data to microprocessor cards.

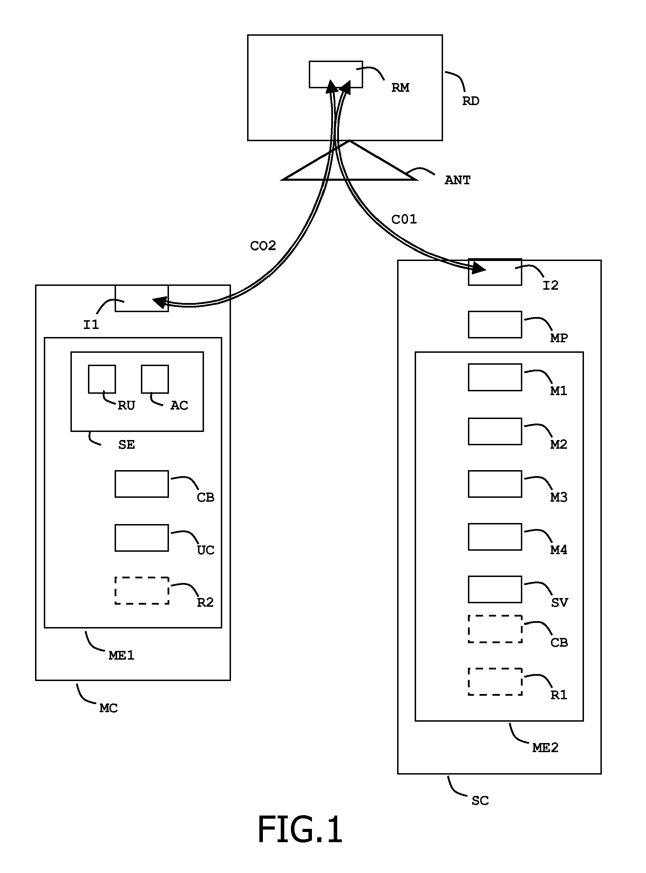

**Figure 1** shows an example of system comprising a contactless memory card MC and a contactless microprocessor card SC communicating through a contactless reader RD according to the invention.

The contactless memory card MC comprises a contactless interface I1 and a non volatile memory ME1. The memory ME1 may be of flash type or EEPROM type for example. The contactless memory card MC comprises a first data CB, a use condition UC and a set SE associated to the first data CB. The set SE comprises an access condition AC and a rule RU. In a preferred embodiment, the contactless memory card MC is a Mifare ® card. Alternatively, the contactless memory card MC may be a NFC tag or any contactless device providing recording services with or without security features. Thus the contactless memory card MC may be replaced with a contactless microprocessor card for example.

The access condition AC defines constraints that must be fulfilled for accessing the first data CB. Thus the microprocessor card SC may get the first data CB only if the access is authorized by the access condition AC.

Advantageously, the access condition AC may reuse the usual protection mechanism which controls every memory block access in numerous existing cards. For instance, if the card MC is a Mifare ® card, the access condition AC may corresponds to the mechanism used by the card MC itself for checking access to each memory block.

Alternatively, the access condition AC may be checked and managed by the microprocessor card SC. In this case, the card SC makes the decision to access or not the targeted memory block of the card MC depending on the result of the access condition AC checking.

The rule RU defines how the value of the first data CB and how the value of the set SE must be managed when a transfer of the first data CB to a microprocessor card occurs.

In a first embodiment, the access condition AC may be a counter which corresponds to the remaining authorized transfers of the first data CB outside the memory card MC. The rule RU may specify that the counter must be decremented when the first data CB is retrieved by the microprocessor card SC. When the counter value reaches zero, the access to first data CB is forbidden.

In a second embodiment, the rule RU may specify that the first data CB must be deleted when the first data CB is retrieved by the microprocessor card SC. The removing of the first data CB from the memory card MC ensures that any next attempt to access the first data CB will fail.

For instance, when the card MC is a Mifare ® card, some specific keys must be used for accessing the memory blocks. In particular, a sector contains a memory block and the associated keys which are required for accessing the sector. By updating the access condition to the sector to "Never", data that is stored in the sector becomes unreachable. This updating operation allows locking the access to a memory block.

Alternatively, the first data CB may be overwritten with a preset pattern in the memory card MC. The next time a microprocessor card SC gets the first data CB, this pattern may allow the microprocessor card SC to conclude that the first data CB has been overwritten and does not contain its initial value. For instance, the first data CB may be filled with zero.

In a third embodiment, the first data CB may be ciphered. Advantageously, the microprocessor card SC is adapted to automatically use the relevant secret value SV which allows deciphering the first data CB. Alternatively the access condition AC may contain a reference to the secret value SV which allows deciphering the first data CB.

The use condition UC defines how the first data CB must be used into the microprocessor card that retrieves the first data CB.

The microprocessor card SC comprises a contactless interface 12, a microprocessor MP and a non volatile memory ME2. The memory ME2 may be any type of non volatile memory, like EEPROM or Flash. The contactless microprocessor card SC comprises a secret value SV, a management means M1, a controlling means M2, a storing means M3 and a cleaning means M4. The microprocessor card SC may be a NFC card.

The management means M1 is capable of retrieving the first data CB and the rule RU from the memory card MC.

For example, the first data CB may be stored at a preset address in the memory card MC and the set SE may be recorded at another predefined address in the memory card MC. The management means M1 may contain or have access to these two addresses in order to know where corresponding data are to be reached. Thus the management means M1 can build a request for reading data into the memory ME1 of the card MC.

In the example of Figure 1, a contactless reader RD comprises an antenna ANT which provides energy and communication channels to the two cards MC and SC. The reader RD comprises a routing means RM which is able to route the messages between the memory card MC and the microprocessor card SC. The routing means RM acts as a communication bridge between the two cards. The microprocessor card SC may exchange data with the reader RD through the communication channel CO1. The memory card MC may exchange data with the reader RD through the communication channel CO2. Thus the microprocessor card SC may exchange messages with the memory card MC thanks to the routing means RM. The routing means RM is able to translate an incoming message compliant with the communication channel CO1 into an outgoing message compliant with the communication channel CO2. Conversely, the routing means RM is able to translate an incoming data compliant with the communication channel CO2 into an outgoing data compliant with the communication channel CO1.

In a preferred embodiment, the routing means RM is an application which is able to communicate with both a contactless memory card and a microprocessor card.

In an example, both the contactless card MC and the microprocessor card SC are assumed to be present in the reader field. The reader RD can manage both cards simultaneously.

First the routing means RM runs in polling mode. The routing means RM send a REQ command to the card SC in order to ask if the microprocessor card SC want to send a command to the contactless card MC. For instance the command to be sent may be an APDU command. (i.e. read data block command)

If yes, the routing means RM receives the APDU command in the RESP data which is sent by the card SC in response to the polling.

Then the routing means RM sends the APDU command to the contactless card MC. The card MC executes the APDU command and returns the corresponding result to the routing means RM. Finally, the routing means RM sends this result to the card SC.

The above-described sequence explains how the routing means RM works. In particular, this example shows the polling phase.

The next sequence shows messages that are exchanged between the two cards MC and SC without mentioning the routing means RM. This example describes another view of the previous sequence.

First, the microprocessor card SC sends a request to the reader RD in order to know if the card MC is present in the magnetic field of the reader RD.

If the card MC is present, the reader RD sends a positive response to the card SC.

Then the card SC sends a message to the card MC. This message may comprise reference of a targeted memory block. In response, the card MC sends the use condition UC, the rule RU and the access conditions AC associated to the targeted memory block. The card SC analyzes the received data. Assuming that the relevant access conditions are fulfilled, the card SC sends a read command aiming at retrieving the content of the targeted block. In response, the card MC sends the data CB which is stored in the targeted block. If the data CB is an executable data (either an APDU or a complete script), the microprocessor card SC executes the data CB. The corresponding result R1 may be stored in the card SC. Another data R2 may be generated via the execution of the data CB. The card SC may send the data R2 to the card MC in order to store this data R2 in the card MC.

When the reader RD is a NFC reader, there is no routing means RM in the reader.

The management means M1 is able to analyze the rule RU and to update both the first data CB and the set SE into the memory card MC according to the rule RU.

Advantageously, the management means M1 may be able to check the access condition AC. In this case, the management means M1 analyzes the access condition AC and made a decision to access or not the first data CB.

Advantageously, the first data CB may be encrypted and the microprocessor card SC may comprise a secret value SV which allows decrypting the first data CB. The management means M1 may be able to decipher said first data CB by using the secret value SV. Moreover, the management means M1 may be able to cipher data which are intended to be written in the memory card MC by using the secret value SV or any relevant secret data.

Moreover the set SE may also be encrypted. An advantage of the invention is to allow limiting the transfer of data to a subset of authorized microprocessor cards. Each of the microprocessor cards belonging to this subset contains the relevant secret data which is required for the deciphering/ciphering operations.

Advantageously, the management means M1 is able to get the use condition UC from the memory card MC. The controlling means M2 is able to guarantee that the first data CB is used in the microprocessor card SC according to the use condition UC.

In a preferred embodiment, the first data CB is an executable data. The first data CB may contain a single command, a group of commands or an entire application.

For example the first data may contain an APDU (Application Protocol Data Unit as defined by ISO 7816 standard) command or a batch of APDU commands. If the microprocessor card SC comprises a virtual machine (e.g. Java ® or .Net ® virtual machine) the first data CB may be interpretable data which is intended to be interpreted by the virtual machine and finally executed by the microprocessor MP.

Advantageously, a length field may be associated to each APDU command. This length field allows the microprocessor card SC to know the number of bytes which is to be retrieved from the card MC. Actually, the length of an APDU command is not fixed.

The first data CB may also be a script compliant with Global platform ®. This script may allow installing an applet into the microprocessor cards SC.

The storing means M3 is able to store a data generated by the execution of the first data CB. Thus a result data R1 which is generated by the execution of the first data CB may be recorded in the microprocessor card SC. The cleaning means M4 is able to delete the first data CB from the microprocessor card SC. In particular, the cleaning means M4 may be able to automatically delete the first data CB after the execution of the first data CB.

In a further embodiment, the management means M1 is able to write in the memory card MC a data R2 which has been generated by the execution of the first data CB. Thus the first data CB may be an application that is installed and executed into the microprocessor card SC. The result of the execution may be stored in the memory card MC.

Advantageously, the set SE may be updated with the data R2. In particular, the access condition AC or the rule RU may be upgraded thanks to the data R2 content.

In order to guarantee the consistency of the content of both the microprocessor card SC and the memory card MC, a commit/rollback mechanism may be implemented. Such a mechanism allows to be sure that the copy of the first data CB into the microprocessor card SC and the update of the set SE content are either made together or not performed.

The invention is particularly useful when both the microprocessor card SC and the card MC are playing cards. Although the following described methods are related to playing cards, the invention also applies to systems and methods using any kinds of cards.

The microprocessor card SC may be a main card and the card MC may be an accessory card.

The first data CB may be a software application which is intended to be installed and run on the microprocessor card SC. The access condition AC may be set to "Always" and the rule RU may specify that the access condition AC must be set to "Never" when the software application CB is transferred outside the memory card. Both cards MC and SC are supposed to be in the field of the reader RD. At a first step, the management means M1 tries to get the software application CB into the memory card by sending a request via the reader RD. If the access condition AC permit to reach the first data CB, then the software application CB is sent to the microprocessor card SC. The rule RU is also sent to the microprocessor card SC either through a separate message or with the software application CB. The management means M1 sends a writing request to the memory card MC in order to set the access condition AC value to "Never". Then the software application CB is installed and run in the microprocessor card SC.

Thanks to the invention, the playing card SC gains new dynamic features which provide a new behavior for the card SC.

The execution of the software application CB may provide a result R1 that can be stored into the microprocessor card SC. Thus even if the software application CB is removed from the cards SC, the result R1 may remain available in the card SC for future use.

The execution of the software application CB may also generate another result R2 which is intended to provide a feedback to the primary memory card MC. Thus the management means M1 sends a writing request to the memory card MC in order to record the result R2. Alternatively, the writing request may target any other data contained in the memory card MC and may aim at updating the targeted data by using the result R2.

The memory card MC may contain a use condition UC associated to the software application CB. This use condition may specify that the software application CB can be executed only once in the microprocessor card SC. Consequently, the software application CB may be deleted from the microprocessor card SC after its first execution.

Alternatively, the use condition UC may specify that the execution of the software application CB or the use of the result R1 depends on a specific event. For instance, the use condition UC may specify that the software application CB can be run only if a given counter has reached a preset threshold value.

In another embodiment, the use condition UC may specify that the result R1 must be transferred to a targeted chip card (not shown on Figures) whose identifier is provided by the use condition UC. Thus the next time the microprocessor card SC will be near the targeted chip card, a request will be sent by the microprocessor card SC in order to write the result R1 in the targeted card.

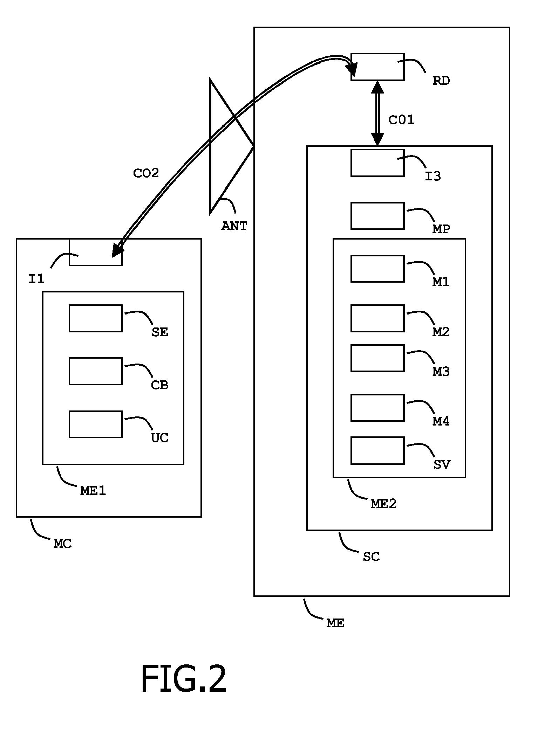

**Figure 2** shows an example of system comprising a contactless memory card MC and a microprocessor card SC which is plugged into a host device ME according to the invention. The microprocessor card SC is a SIM card and the portable device ME is a mobile phone able to communicate in contactless mode.

The contactless memory card MC is similar to the contactless memory card of the Figure 1. The microprocessor card SC is similar to the contactless microprocessor card of the Figure 1 with one exception: the microprocessor card is also a contact card. The microprocessor card SC comprises a contact interface 13 which allow communicating with the connected host machine ME through a contact protocol. For instance, the microprocessor card SC may communicate through T=0 protocol as defined by the IS07816 standard.

The host machine ME may be a portable device like a telecom handset. The host machine ME comprises an antenna ANT providing energy and communication channels to the contactless memory card MC. The telecom handset ME comprises a reader RD which is able to communicate with the contactless card MC. The microprocessor card SC may exchange data with the telecom handset ME through the communication channel CO1. The contactless card MC may exchange data with the telecom handset ME through the communication channel CO2. Thus the microprocessor card SC may exchange data with the contactless card MC thanks to the reader RD. In a preferred embodiment, the telecom handset ME is compliant with the NFC technology.

In the above-described embodiment, the four means M1, M2 M3 and M4 have been described has four means. They may be implemented as any number of means by combining or not their corresponding functions and sub-functions.

When the invention applies to playing cards, the microprocessor card SC may be a main card dedicated to a player. Each player may have his/her own main card. A set of contactless memory cards may be available and compatible with the main card. For example, the main card may contain a character (i.e. person, hero, or warrior) and the memory cards may contain objects and capabilities which can be acquired by the character. For instance, a memory cards may contain a sword, a shield or a bow. A memory cards may contain a dynamic capability in the form of an application which may be run in the main card. Such ability may be able to dodge an attack or to make a feint, for example. If the character of the main card is a circus performer, the gained capability may be to know how to make a new juggling act.

Advantageously, the set of contactless memory cards and the main card may all contain an identifier which is specific to the owner of the cards.

## Claims

1. A **system** comprising a contactless card (MC) and a microprocessor card (SC), said contactless card (MC) comprising a first data (CB),
**characterized in that** said contactless card (MC) has a second data (SE) comprising a rule (RU) and an access condition (AC) associated to said first data (CB), **in that** said microprocessor card (SC) comprises a management means (M1) able to retrieve said first data (CB) and said rule (RU) from the contactless card (MC), and **in that** said management means (M1) is able to update said first and second data (CB,SE) into the contactless card (MC) according to the rule (RU).

2. A system according to claim 1, wherein said management means (M1) is able to update the access condition (AC) by restricting or forbidding access to the first data (CB).

3. A system according to any one of claim 1 to 2, wherein the management means (M1) is able to check the access condition (AC).

4. A system according to any one of claim 1 to 3, wherein said first and second data (CB,SE) are stored at predefined addresses in the contactless card (MC) and wherein the management means (M1) is able to get these addresses.

5. A system according to any one of claim 1 to 4, wherein said first data (CB) is ciphered, wherein the microprocessor card (SC) comprises a secret value (SV) and wherein the management means (M1) is able to decipher said first data (CB) by using said secret value (SV).

6. A system according to any one of claim 1 to 5, wherein the contactless card (MC) comprises an use condition (UC), wherein the management means (M1) is able to retrieve the use condition (UC), and wherein the microprocessor card (SC) comprises a controlling means (M2) which enforces compliance of the use condition (UC) when the first data (CB) is used in the microprocessor card (SC).

7. A system according to any one of claim 1 to 8, wherein the first data (CB) is an executable data.

8. A system according to claim 7, wherein the execution of said first data (CB) generates a third data (R1), wherein the microprocessor card (SC) comprises a storing means (M3) and a cleaning means (M4), said storing means (M3) being able to store the third data (R1) in the microprocessor card (SC) and said cleaning means (M4) being able to delete the first data (CB) from the microprocessor card (SC).

9. A system according to any one of claim 7 to 8, wherein execution of said first data (CB) generates a fourth data (R2) and wherein said management means (M1) is able to store the fourth data (R2) in the contactless card (MC).

10. A system according to any one of claim 1 to 9, wherein both said microprocessor card (SC) and contactless card (MC) are playing cards.

11. A system according to any one of claim 1 to 10, wherein said system comprises a contactless reader (RD) having a routing means (RM) able to transfer data exchanged between the contactless card (MC) and the microprocessor card (SC).

12. A **method** for exchanging data between a contactless card (MC) and a microprocessor card (SC), said contactless card (MC) comprising first and second data (CB,SE), the second data (SE) comprising a rule (RU) and an access condition (AC) associated to said first data (CB),
**characterized in that** the method comprises the following steps:
- if the access condition (AC) permits to reach first data (CB), then getting the first data (CB) in the microprocessor card (SC),
- getting the rule (RU) in the microprocessor card (SC),
- updating said first data (CB) or said second data (SE) into the contactless card (MC) according to the rule (RU).

13. A method according to claim 12, wherein the contactless card (MC) comprises a use condition (UC) and wherein said method comprises the further steps:
- getting the use condition (UC) in the microprocessor card (SC),
- using the first data (CB) in the microprocessor card (SC) according to the use condition (UC).

14. A method according to claim 12, wherein the first data (CB) is an executable data and wherein said method comprises the further steps:
- generating a third data (R1) by executing the first data (CB) in the microprocessor card (SC),
- storing said third data (R1) in the microprocessor card (SC),
- deleting the first data (CB) from the microprocessor card (SC).
